# FASCICULE DE BREVET EUROPEEN

(11) **EP 3 105 845 B1**
(45) Date de publication et mention de la délivrance du brevet: **19.09.2018**
(21) Numéro de dépôt: 15705681.3
(22) Date de dépôt: 03.02.2015
(51) Int. Cl.: H02M 1/36, H02J 7/14, H02J 7/34

(54) **SYSTEME D'ALIMENTATION A TENSION CONTINUE CONFIGURE POUR PRECHARGER UN CONDENSATEUR DE FILTRAGE AVANT L'ALIMENTATION D'UNE CHARGE**
GLEICHSPANNUNGSVERSORGUNGSSYSTEM ZUR VORLADUNG EINES GLÄTTUNGSKONDENSATORS VOR DER SPEISUNG EINER LAST
DC VOLTAGE SUPPLY SYSTEM CONFIGURED TO PRECHARGE A SMOOTHING CAPACITOR BEFORE SUPPLYING A LOAD

(30) Priorité: 14.02.2014 FR 1451214
(43) Date de publication de la demande: 21.12.2016
(73) Titulaire: Commissariat à l'énergie atomique et aux énergies alternatives, 75015 Paris (FR)
(72) Inventeur: CHATROUX, Daniel, 38470 Teche (FR); BERANGER, Bruno, 38410 Saint-Martin d'Uriage (FR); CARCOUET, Sébastien, 38450 Vif (FR)
(74) Mandataire: GIE Innovation Competence Group
(86) Numéro de dépôt international: PCT/FR2015/050251
(87) Numéro de publication internationale: WO 2015/121564

(56) Documents cités:
- DE-A1-102011 002 673
- DE-A1-102011 006 096
- DE-A1-102012 219 488
- FR-A1- 2 998 108

## Description

L'invention concerne un système d'alimentation électrique de puissance à tension continue, et en particulier un système d'alimentation muni de contacteurs pour alimenter sélectivement une charge électrique et muni d'une fonction de précharge d'un condensateur de filtrage de la charge électrique.

Les systèmes électriques de forte puissance à tension continue connaissent un développement important. En effet, de nombreux systèmes de transport incluent un système d'alimentation de tension continue, par exemple basé sur des batteries d'accumulateurs électrochimiques.

La connexion du système d'alimentation de puissance à la charge nécessite des précautions pour éviter d'induire des dégradations des circuits. Ainsi, la connexion du système d'alimentation à une charge se fait par l'intermédiaire de contacteurs. Des contacteurs permettent par exemple de conduire et couper des courants continus supérieurs à 100 A avec des niveaux de pertes très faibles en résistant à un grand nombre de cycles de connexion/déconnexion. Classiquement, pour des raisons de sécurité, la coupure réalisée par l'intermédiaire des contacteurs est bipolaire : les pôles plus et moins du système d'alimentation sont sélectivement raccordés à la charge par l'intermédiaire de contacteurs respectifs. De tels contacteurs permettent généralement d'isoler le système d'alimentation de puissance avec une isolation galvanique garantie par une ouverture de contact électrique sur une distance de plusieurs millimètres.

Dans la plupart des applications, les charges électriques à alimenter réalisent des commutations électroniques. Par exemple, des onduleurs sont le plus souvent utilisés pour alimenter des moteurs électriques. Pour fournir ou absorber le courant lors des commutations, un condensateur de filtrage est connecté aux bornes du système d'alimentation électrique durant l'alimentation de la charge. Un condensateur est un stockage énergie sous forme électrostatique. Le condensateur de filtrage appelé aussi condensateur de découplage permet d'assurer une réserve d'énergie au plus près des composants utilisés pour les commutations. Ainsi, les impulsions de courants peuvent être fournies ou absorbées par le condensateur, avec de faibles variations de tension.

Un moteur et son onduleur sont typiquement mis sous tension par les contacteurs mentionnés précédemment. Dans une application de motorisation de transport, ces deux contacteurs permettent d'alimenter la traction uniquement si le véhicule est apte à démarrer, et permettent de couper la traction en cas de défauts. Un onduleur inclut fréquemment 6 transistors de type IGBT constituant trois bras de commutation et le moteur est directement alimenté par cet onduleur.

Un condensateur de découplage est placé en parallèle avec l'onduleur. Ce condensateur sert au découplage pour minimiser les fluctuations de la tension d'alimentation causée par la commutation rapide des transistors à leur fermeture ou à leur ouverture. L'énergie emmagasinée dans le condensateur est : ½ C * U², avec C sa capacité et U la tension appliquée à ses bornes par le système d'alimentation.

Il n'est donc pas possible de fermer directement les contacteurs sur l'onduleur sous peine d'avoir un pic de courant pouvant atteindre plusieurs milliers d'ampères si le condensateur est déchargé, avec le risque de créer sur l'onduleur une surtension dangereuse pour le matériel, du fait de la surtension provoquée par l'inductance parasite de câblage sur le condensateur et les transistors.

Cela devient notamment problématique lorsque les tensions aux bornes du système d'alimentation dépassent une centaine de volt. Le circuit de câblage entre le système d'alimentation et le condensateur de découplage constituent un circuit résonnant série. L'inductance est celle du circuit de câblage, classiquement de l'ordre de 1 µH par mètre de longueur. La capacité est essentiellement définie par le condensateur de découplage. La résistance série d'amortissement du circuit résonnant est formée par des résistances parasites du système d'alimentation, du câblage et du condensateur.

Pour des applications de fortes puissances, l'impédance liée à l'inductance parasite du circuit résonnant devient nettement supérieure à la résistance série parasite. Cette impédance détermine l'amplitude crête du courant et l'oscillation de résonance. Pour certains niveaux de tension, le courant à l'enclenchement peut être de plusieurs milliers d'ampères. Ce courant détériore les contacts des contacteurs, et peut même les souder entre eux. La surtension de résonance peut s'avérer suffisante pour détruire le condensateur de découplage et/ou les composants électroniques alimentés.

Un circuit de précharge est alors utilisé pour surmonter ces problèmes. Un circuit de précharge a pour fonction de réaliser une charge du condensateur de découplage préalablement à la fermeture des contacteurs. Le contacteur de la borne négative du système d'alimentation est généralement fermé au préalable. Le circuit de pré charge est connecté en parallèle du contacteur de la borne positive du système d'alimentation. Le circuit de précharge inclut typiquement un contacteur connecté en série avec une résistance de puissance, comme décrit dans le document WO2013128700. Lors de la fermeture du contacteur du circuit de précharge, ce circuit est traversé par un fort courant afin de réaliser la charge du condensateur de découplage. La résistance de puissance est alors sollicitée brusquement lors de la charge et doit être capable de stocker transitoirement l'énergie sous forme de chaleur, chaleur qu'elle va ensuite dissiper. Le condensateur de découplage est chargé pendant une durée prédéfinie ou jusqu'à ce que sa tension soit proche de la tension fournie par le système d'alimentation. Le contacteur de la borne positive du système d'alimentation peut alors être fermé et le contacteur de précharge peut alors être ouvert.

La tension aux bornes du condensateur de découplage est définie par une charge exponentielle avec une constante de temps. La constante de temps de cette charge est définie par τ = R * C, avec R la valeur de la résistance de puissance du circuit de précharge. Le pic de courant est défini par E/R, avec E la tension aux bornes du système d'alimentation.

Usuellement, la précharge est maintenue pendant une durée au moins égale à 3τ pour limiter l'écart entre la tension E et la tension aux bornes du condensateur lors de la fermeture du contacteur de la borne positive.

Si le condensateur de découplage ne se charge pas, par exemple suite à un défaut d'électronique de puissance ou suite à un court-circuit en entrée, la résistance de puissance du circuit de précharge est traversée en continu par un courant valant E/R. La résistance de puissance n'étant dimensionnée que pour être traversée par cette valeur de courant que de façon transitoire, ce cas de figure aboutit à sa destruction, au risque d'un départ de feu. Un fusible est usuellement disposé en série avec la résistance de puissance pour ouvrir le circuit de charge avant la destruction de cette résistance de puissance. Cependant, le dimensionnement d'un tel fusible est difficile et des cas de fatigue thermique de tels fusibles ont déjà été constatés. Le contacteur du circuit de précharge doit également présenter un pouvoir de coupure au moins égal à ce courant. Un tel contacteur est relativement délicat à réaliser pour du courant continu et est donc à la fois élaboré et coûteux.

Les tensions E et U ne sont pas égales lors de la fermeture du contacteur de la borne positive même en l'absence de défaillance. En cas de charge insuffisante du condensateur de découplage ou lorsque la charge électrique consomme du courant dès la phase de précharge, si le contacteur de la borne positive est fermé après une durée de précharge prédéfinie, l'écart entre les tensions U et E peut être encore plus important, au risque de détériorer des circuits. Lors de la fermeture du contacteur de la borne positive, le pic de courant est alors seulement limité par les résistances et inductances parasites du circuit. Si la fermeture du contacteur de la borne positive est conditionnée par une valeur minimale de la tension U, la consommation par la charge électrique peut empêcher la tension U d'atteindre une valeur de seuil, ce qui fait que la résistance de puissance du circuit de charge reste conductrice en continu au risque d'induire sa destruction.

Par ailleurs, durant la précharge, l'énergie dissipée par la résistance de puissance est au moins égale à l'énergie stockée dans le condensateur de découplage, ce qui conduit à une déperdition d'énergie du système d'alimentation.

Pour certaines applications, la durée de la phase de pré-charge est limitée à une seconde ou moins pour être non décelable par l'utilisateur. Le circuit de précharge doit alors présenter une forte puissance de l'ordre de plusieurs kilowatts, avec des courants de l'ordre de dix à quelques dizaines d'ampères par exemple. La résistance de puissance doit alors supporter un échauffement encore plus rapide et important en cas de défaut de type court-circuit.

Le document DE10 2011 006 096 décrit un système incluant une batterie haute tension, un onduleur, et un moteur électrique. Ce document porte sur un mode d'équilibrage de charge de la batterie à basse tension. Au moment de mettre oeuvre, l'équilibrage de charge de la batterie, un condensateur connecté en parallèle de celle-ci est déjà chargé. L'ensemble onduleur/moteur électrique est découplé de la batterie pour réaliser l'équilibrage. L'équilibrage prend en compte les capacités parasites modélisées pour les éléments de batterie. Ce document ne traite pas du courant de charge du condensateur. Ce document décrit une inductance montée en pont dans un circuit en H, avec des liaisons en parallèle du condensateur.

Le document DE10 2011 006 096 décrit un procédé d'accouplement d'un ensemble d'accumulateurs à une charge (connectée par un onduleur) associée à un condensateur. Ce document traite du problème de la connexion en parallèle d'éléments de batterie de puissance (utilisation automobile) ayant des charges distinctes, avec les problématiques de forts courants transitoires au moment de leur connexion en parallèle. Ce document décrit des dispositifs de contrôle de charge commandant une connexion sélective des accumulateurs au dispositif de stockage, en vue d'équilibrer les tensions des accumulateurs et du dispositif de stockage. Après l'équilibrage, les accumulateurs et le dispositif de stockage sont tous connectés en parallèle. Ce document ne détaille notamment pas le courant de charge du condensateur par rapport à la charge électrique.

L'invention vise à résoudre un ou plusieurs de ces inconvénients. L'invention porte ainsi sur un système électrique, tel que défini dans les revendications annexées.

L'invention porte également sur un système d'alimentation électrique de puissance à tension continue pour un système électrique, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'un exemple de véhicule à moteur électrique alimenté par un système d'alimentation;
- la figure 2 est une représentation schématique d'un premier mode de réalisation d'un système d'alimentation selon l'invention associé à une charge électrique;
- la figure 3 illustre des diagrammes de tension aux bornes d'un condensateur de découplage dans deux configurations de fonctionnement ;
- la figure 4 illustre des diagrammes de courant fourni par un système d'alimentation dans les mêmes configurations de fonctionnement que la figure 3;
- la figure 5 est une représentation schématique d'un deuxième mode de réalisation d'un système d'alimentation selon l'invention associé à une charge électrique ;
- la figure 6 est un chronogramme illustrant le courant fourni par un système d'alimentation en fonction de signaux de commande appliqués sur un interrupteur de charge ;
- la figure 7 est une représentation schématique d'un troisième mode de réalisation d'un système d'alimentation selon l'invention associé à une charge électrique ;
- la figure 8 est un chronogramme illustrant le courant fourni par un système d'alimentation en fonction de différents signaux de commandes.

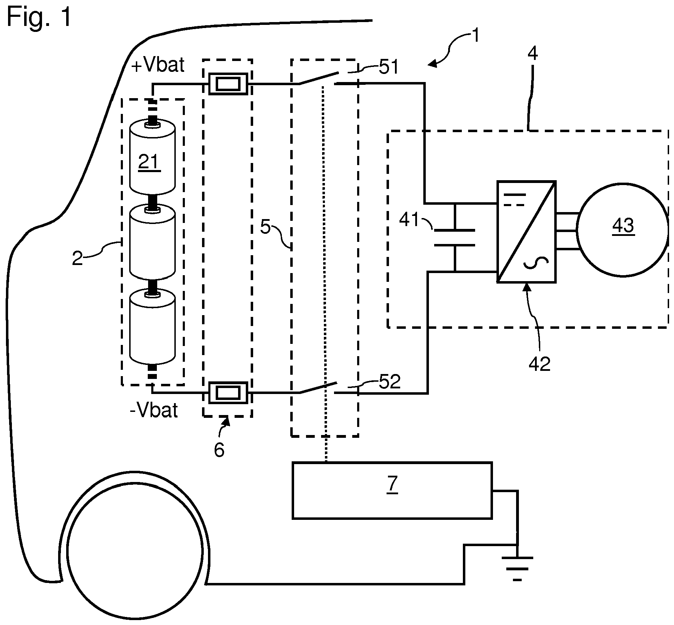

La figure 1 illustre un exemple de véhicule mettant en oeuvre un mode de réalisation d'un système d'alimentation. Le véhicule est un véhicule électrique comprenant de façon connue en soi un système électrique incluant un système d'alimentation électrique de puissance 1 et une charge électrique 4.

Le système d'alimentation 1 comprend ici une batterie 2 incluant des accumulateurs électrochimiques 21 connectés en série. La batterie 2 comprend un grand nombre d'accumulateurs 21 connectés en série, typiquement entre 40 et 150 accumulateurs en fonction de la tension nécessaire et du type d'accumulateurs utilisé. La tension entre les pôles de la batterie 2 chargée est typiquement de l'ordre de 400 V. La batterie 2 applique une tension +Vbat sur un premier pôle, et une tension -Vbat sur un deuxième pôle. Les accumulateurs 21 sont connectés en série par l'intermédiaire de connexions électriques de puissance. Les pôles de la batterie 2 sont connectés à la charge électrique 4. En particulier, les pôles de la batterie 2 sont connectés à une interface continu d'un onduleur 42. Un moteur électrique 43 est connecté sur une interface alternatif de l'onduleur 42. Un condensateur de découplage 41 est connecté à l'interface d'entrée de l'onduleur 42.

La connexion entre les pôles de la batterie 2 et l'interface continu de l'onduleur 42 est réalisée dans cet exemple par l'intermédiaire d'un circuit de protection 6 et par l'intermédiaire d'un circuit d'accouplement de puissance 5. Le circuit de protection 6 peut comprendre de façon connue en soi des fusibles configurés pour ouvrir la connexion lors d'un court-circuit. Le circuit d'accouplement de puissance 5 comprend des contacteurs 51 et 52 permettant de connecter/déconnecter sélectivement les pôles de la batterie 2 à l'interface continu de l'onduleur 42. L'ouverture/fermeture des interrupteurs 51 et 52 est commandée par un circuit de commande 7, typiquement un calculateur de supervision du fonctionnement de la batterie 2. Le circuit de commande 7 est typiquement alimenté par l'intermédiaire d'une batterie d'alimentation du réseau de bord du véhicule, présentant un niveau de tension très inférieur à celui de la batterie 2.

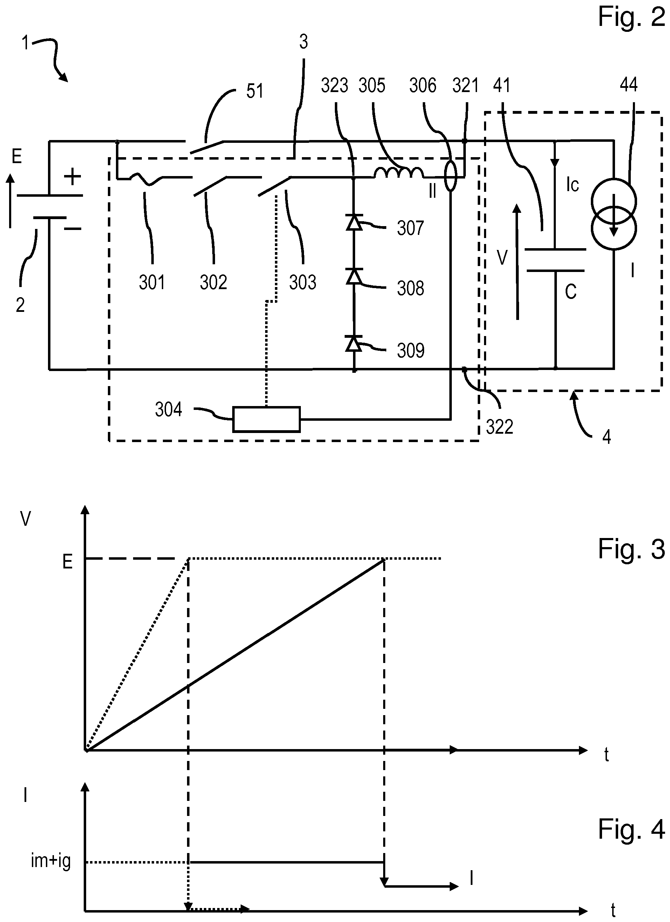

La figure 2 est une représentation schématique d'un premier mode de réalisation d'un système d'alimentation électrique de puissance à tension continue 1 selon l'invention, associé à la charge électrique 4. La charge électrique 4 comporte notamment un consommateur électrique 44 susceptible d'appeler un courant électrique dès son alimentation par le système 1. Le condensateur de découplage 41 est connecté en parallèle aux bornes de ce consommateur électrique 44.

Le système d'alimentation 1 comporte une source de tension continue 2 (typiquement une batterie de cellules électrochimiques) présentant un pôle positif et un pôle négatif. Le système d'alimentation 1 comporte des première et deuxième bornes 321 et 322 destinées à être connectées à la charge 4 pour lui appliquer une tension d'alimentation continue. Le circuit d'accouplement de puissance comporte ici uniquement un contacteur 51, dans un souci de simplification. Le contacteur 51 connecte sélectivement le pôle positif de la source 2 à la borne 321 du système 1. La connexion entre le pôle négatif de la source 2 et la borne 322 est ici dépourvue de contacteur. Le contacteur 51 forme une première branche de connexion entre le pôle positif de la source 2 et la borne 321, cette branche étant destinée à être traversée par le courant d'alimentation de la source 2 après une phase de précharge du condensateur 41.

Un circuit 3 réalise sélectivement l'interconnexion entre le pôle positif de la source de tension 2 et la première borne 321 du système 1. Le circuit 3 comporte notamment un interrupteur 302, un interrupteur 303 et une inductance 305 connectés en série, pour connecter sélectivement le pôle positif de la source 2 et la borne 321. Le circuit 3 forme ainsi une deuxième branche de connexion entre le pôle positif de la source 2 et la borne 321, connectée en parallèle de la première branche. La deuxième branche est destinée à réaliser une précharge du condensateur de découplage 41, avant la fermeture du contacteur 51.

Le circuit 3 comporte en outre un dispositif de conduction unidirectionnelle de la borne 322 vers un noeud de connexion 323 entre l'interrupteur 303 et l'inductance 305. Le dispositif de conduction unidirectionnelle comporte ici plusieurs diodes 307, 308 et 309 connectées en série et dont les anodes sont connectées au potentiel le plus bas. L'utilisation de plusieurs diodes permet de façon connue en soi d'offrir une résistance de claquage à des tensions élevées sans faire appel à des diodes surdimensionnées. Une telle connexion en série fournit également une redondance face au type de dysfonctionnement le plus probable d'une des diodes, à savoir un court-circuit.

Le circuit 3 comprend en outre un circuit de commande 304. Le circuit de commande 304 comporte plusieurs modes de fonctionnement. Le circuit de commande 304 comprend notamment un mode d'alimentation de la charge électrique 4, dans lequel il maintient le contacteur 51 fermé et l'interrupteur 302 ouvert. Le circuit de commande 304 comprend également un mode de charge du condensateur de découplage 41, dans lequel il maintient le contacteur 51 ouvert, et dans lequel il maintient l'interrupteur 302 fermé. Dans le mode de charge, le circuit de commande 304 commande des commutations de l'interrupteur 303, de façon à débiter un courant régulé à travers l'inductance 305. Lorsque les deux branches sont ouvertes et qu'une requête d'alimentation de la charge 4 par le système d'alimentation 1 est reçue, le circuit de commande 304 fonctionne tout d'abord en mode de charge du condensateur 41, avant de basculer vers le mode d'alimentation de la charge 4.

Le consommateur électrique 44 peut être amené à appeler un courant électrique dès le mode d'alimentation de la charge électrique. Par exemple, la charge électrique 4 peut comprendre un moteur électrique et un circuit de commande du moteur électrique. Le circuit de commande du moteur électrique doit alors être alimenté préalablement à l'alimentation du moteur électrique lui-même. On désignera par Im l'intensité maximale que le consommateur électrique 44 est susceptible de consommer. Le circuit de commande 304 est configuré pour réguler le courant à travers l'inductance 305 à un niveau Ir supérieur à cette valeur Im durant le mode de charge du condensateur 41. Ainsi, même si le consommateur électrique 44 réalise une consommation maximale de courant dès le mode de charge du condensateur 41, on peut garantir une charge du condensateur de découplage 41.

Lorsque le circuit de commande 304 détermine que la différence, entre d'une part la tension entre les bornes 321 et 322 et d'autre part la tension entre les pôles positifs et négatifs de la source 2, est inférieure à un premier seuil, il bascule vers le mode d'alimentation de la charge 4. Le circuit de commande 304 réalise alors la fermeture du contacteur 51 et l'ouverture de l'interrupteur 302. Ce premier seuil peut par exemple être dimensionné en valeur absolue (par exemple 5 V) ou en pourcentage de la tension nominale entre les pôles de la source 2 (par exemple 5 %).

Pour mettre en oeuvre la régulation de courant, une sonde 306 mesure ici le courant série II traversant l'inductance 305. La valeur mesurée par la sonde 306 est envoyée au circuit de commande 304. Le circuit de commande 304, régule le courant moyen débité à travers l'inductance 305 au niveau Ir=Im+Ig, avec Ig une valeur minimale de courant de charge garantie pour le condensateur 41.

La figure 3 est un diagramme illustrant la tension aux bornes du condensateur 41 durant une phase de charge dans deux conditions de fonctionnement différentes. La figure 4 est un diagramme illustrant le courant débité par la source de tension 2 dans ces deux conditions de fonctionnement.

La courbe en pointillés illustre une condition de fonctionnement dans laquelle la charge 4 et le consommateur électrique 44 en particulier n'appellent pas de courant durant le mode de charge du condensateur 41. L'intégralité du courant II (régulé à une valeur Ir=Im+Ig) est appliquée au condensateur 41, on a alors un courant Ic dans la branche du condensateur 41 tel que Ic=II. La tension V aux bornes du condensateur 41 croit linéairement avec le temps. En supposant les chutes de tension dans la deuxième branche comme étant nulles lorsque l'interrupteur 303 est fermé, la tension V atteint la tension E entre les pôles de la source 2. Comme le courant I appelé par le consommateur électrique 44 est nul, le courant débité par la source de tension 2 devient nul. Le circuit de commande 304 bascule ensuite vers le mode de fonctionnement d'alimentation de la charge 4, ferme le contacteur 51 et ouvre l'interrupteur 302. Ces commutations sont alors effectuées avec des différences de potentiel nulles entre les bornes du contacteur 51 et entre les bornes de l'interrupteur 302.

La courbe en trait plein illustre une condition de fonctionnement dans laquelle le consommateur électrique 44 appelle un courant non nul I durant le mode de charge du condensateur 41. Le courant moyen II traversant l'inductance 305 est régulé à la valeur Ir. Le courant de charge du condensateur Ic vaut alors Ir-I=II-I. La tension V aux bornes du condensateur 41 croit linéairement avec le temps, mais plus lentement que dans la condition de fonctionnement précédente. En supposant encore les chutes de tension dans la deuxième branche comme étant nulles lorsque l'interrupteur 303 est fermé, la tension V finit par atteindre la tension E entre les pôles de la source 2 plus tardivement. Le condensateur est chargé. Le courant débité par la source de tension 2 devient égal au courant consommé par le consommateur électrique I. Le circuit de commande 304 bascule ensuite vers le mode de fonctionnement d'alimentation de la charge 4, ferme le contacteur 51 et ouvre l'interrupteur 302. Ces commutations sont alors effectuées avec des différences de potentiel nulles entre les bornes du contacteur 51 et entre les bornes de l'interrupteur 302. Par ailleurs, du fait des commutations commandées par le circuit de commande 304 sur l'interrupteur 303, l'ouverture de l'interrupteur 302 peut être réalisée à courant nul, ce qui permet d'utiliser un interrupteur 302 avec un pouvoir de coupure du courant continu relativement réduit. L'interrupteur 302 pourra par exemple être un interrupteur électromécanique avec des contacts dans l'air, qui n'est pas apte à couper le courant continu II. Le courant I appelé par le consommateur électrique 44 est alors fourni par l'intermédiaire du contacteur 51 de la première branche.

Du fait d'une charge linéaire du condensateur 41 dans le mode de charge du circuit de commande 304, le temps de charge du condensateur 41 est fortement réduit. Par ailleurs, la deuxième branche peut se dispenser de résistance de protection en série avec les interrupteurs 302 et 303, de sorte que l'essentiel de l'énergie débitée par la source 2 sert à recharger le condensateur 41, de sorte que les pertes par effet Joule sont minimales dans le mode de charge. Le rendement énergétique pour des circuits à découpage étant typiquement compris entre 90 et 98 %, un interrupteur 303 ainsi commandé permet de limiter les pertes lors de la charge du condensateur 41.

Durant les ouvertures de l'interrupteur 303 du mode de charge, un courant de roue libre s'établit à travers les diodes 307 à 309 formant le dispositif de conduction unidirectionnelle.

Le circuit de commande 304 pourra déterminer l'apparition d'un dysfonctionnement lorsque la tension aux bornes du condensateur n'atteint pas une tension suffisante à l'issue d'une durée prédéterminée. Dans un tel cas, à l'issue de cette durée, le circuit de commande bascule du mode de charge du condensateur 41 vers un mode de sécurité, dans lequel il maintient ouvert à la fois le contacteur 51 et l'interrupteur 302.

La durée prédéterminée sera par exemple fixée comme la durée nécessaire pour que le courant de régulation Ir permette une charge complète du condensateur 41 lorsque le consommateur électrique 44 consomme son courant maximal Im. Cette durée sera avantageusement inférieure à 3 secondes pour rendre la charge électrique 4 rapidement utilisable après une commande de connexion entre la source de tension 2 et cette charge électrique 4.

L'interrupteur 303 peut typiquement être un transistor commandé en régime de commutation par le circuit 304. Le transistor peut être commandé par le circuit 304 par exemple à fréquence fixe en modulation de largeur d'impulsion, ou à fréquence variable.

Pour protéger la deuxième branche en cas de surintensité liée à un court-circuit sur l'interrupteur 303, un fusible 301 est avantageusement connecté en série avec les interrupteurs 302 et 303.

Le dimensionnement du circuit 3 repose essentiellement sur le dimensionnement en énergie de l'inductance 305. En fonction de la capacité du condensateur 41 à charger, un même circuit 3 pourra être utilisé en changeant d'inductance 305 et en adaptant la valeur du courant de régulation du circuit de commande 304.

L'invention permet d'obtenir des performances particulièrement avantageuses, et ce avec des composants d'usage très courant dans le domaine des alimentations à découpage et des dimensionnements relativement courants pour l'inductance 305, l'interrupteur 303, et les diodes 307 à 309. Par ailleurs, pour un interrupteur 303 sous forme de transistor, l'utilisation du circuit 3 pendant une durée réduite de charge du condensateur 41 permet d'utiliser des radiateurs de dissipation thermique d'une dimension limitée, voire de s'en dispenser. De même, il est possible de se dispenser de radiateurs de dissipation thermique pour l'inductance 305 et de minimiser le coût et la taille de celle-ci en tolérant des niveaux de pertes plus important par exemple en choisissant une excursion magnétique supérieure et/ou une densité de courant dans les bobinages plus élevés. Classiquement, dans un convertisseur, le niveau de perte de l'inductance est de l'ordre de 1 à 2%. Pour l'invention, un niveau de pertes de 5 à 10% peut être choisi par exemple. L'invention procure encore un rendement très amélioré par rapport aux solutions de l'état de l'art, pour une taille et un coût de l'inductance réduit.

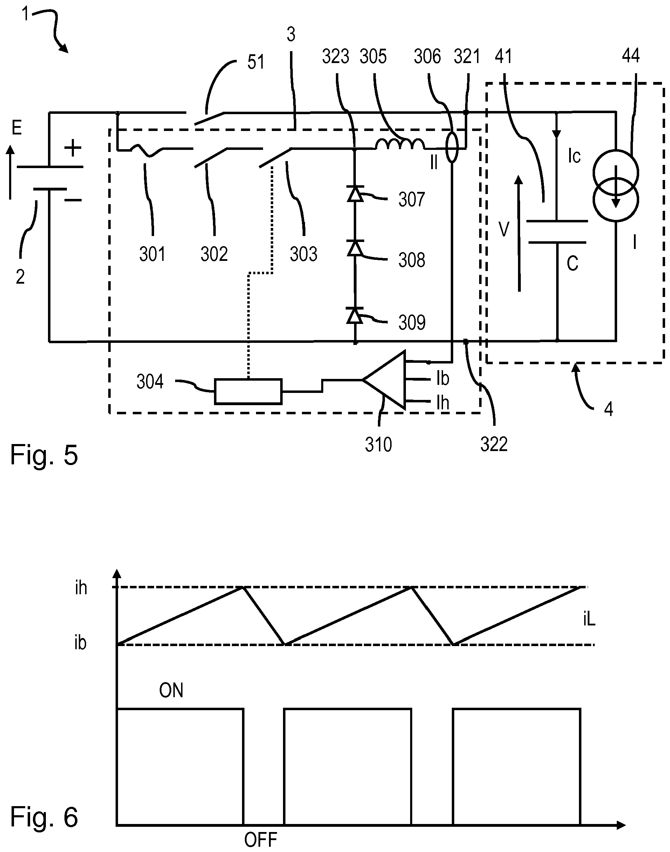

La figure 5 est une représentation schématique d'un deuxième mode de réalisation d'un système d'alimentation électrique de puissance à tension continue 1 selon l'invention, associé à la charge électrique 4. La structure de la deuxième branche et du dispositif de conduction unidirectionnelle du premier mode de réalisation est ici reprise.

La régulation du courant traversant l'inductance 305 dans le mode de charge du condensateur 41 utilise ici un mode de régulation par hystérésis avec un découpage à fréquence variable. La sonde 306 mesure le courant traversant l'inductance 305. Le courant mesuré par la sonde 306 est comparé par un comparateur 310 à des seuils. Comme illustré dans le diagramme de la figure 6, l'interrupteur 303 est ouvert lorsque le courant II atteint un seuil haut ih, et fermé lorsque le courant II atteint un seuil bas Ib. Du fait de variations de pente du courant dans l'inductance 305 durant la charge du condensateur 41, le circuit 3 est alors à fréquence variable. Le courant moyen fourni par l'inductance est alors (ih+ib)/2.

Un mode de réalisation non illustré peut mettre en oeuvre une régulation avec commande de l'interrupteur 303 par modulation de largeur d'impulsion. À cet effet, un courant traversant l'inductance est mesuré par une sonde. La valeur mesurée par la sonde est appliquée à l'entrée d'un amplificateur. L'amplificateur compare cette valeur mesurée à une valeur de courant de consigne. L'amplificateur génère une valeur d'erreur, qui peut être appliquée sur un correcteur proportionnel/intégral. La sortie de ce correcteur proportionnel/intégral peut commander le rapport cyclique de fermeture de l'interrupteur 303. L'interrupteur 303 fonctionne alors à fréquence fixe et rapport cyclique variable.

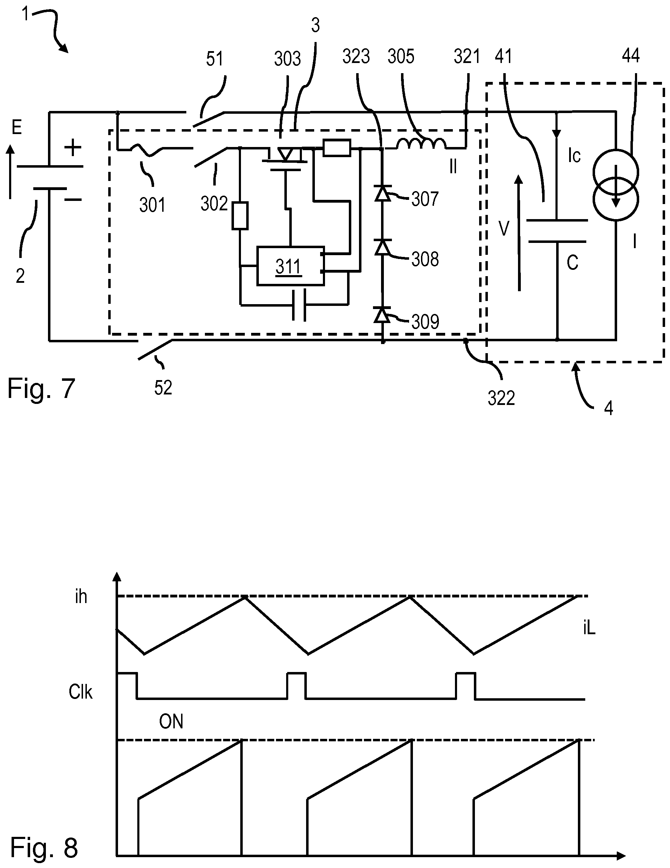

La figure 7 est une représentation schématique d'un troisième mode de réalisation d'un système d'alimentation électrique de puissance à tension continue 1 selon l'invention, associé à la charge électrique 4. La structure de la deuxième branche et du dispositif de conduction unidirectionnelle du premier mode de réalisation est ici reprise. Par ailleurs, le système 1 comporte ici un contacteur 52 connectant sélectivement le pôle négatif de la source 2 et la borne 322, de sorte que le circuit d'accouplement de puissance présente un niveau de sécurité renforcé.

La régulation du courant traversant l'inductance 305 est ici réalisée en modulation de largeur d'impulsion en mode courant. Le circuit de commande est ici mis en oeuvre sous forme de circuit de contrôle 311. L'interrupteur 303 est fermé à fréquence fixe par le circuit de contrôle311. L'interrupteur 303 est ici un transistor MOS de type N. Comme illustré à la figure 8, le circuit de contrôle 311 réalise la fermeture du transistor 303 à chaque impulsion d'horloge et le circuit de contrôle 311 ouvre le transistor 303 lorsqu'un seuil de courant Ih traversant le transistor 303 est atteint. La courbe du haut illustre le courant traversant l'inductance 305. La courbe intermédiaire illustre un signal d'horloge. Le transistor est mis en conduction au front descendant de l'horloge. La courbe inférieure illustre le courant traversant le transistor 303. Un circuit de contrôle 311 mettant en oeuvre un tel mode de régulation est notamment diffusé sous la référence commerciale UC3842. Un tel circuit de contrôle effectue une lecture de courant par l'intermédiaire de résistances.

L'interrupteur 303 peut-être un transistor, par exemple du type Mosfet ou bipolaire. D'autres types d'interrupteurs 303 peuvent bien entendu être utilisés, par exemple un transistor IGBT.

L'inductance 305 fonctionne en pratique pendant une durée relativement limitée. L'inductance 305 peut alors être réalisée avec un tore à poudre de fer fonctionnant à fort champ avec un bobinage de cuivre de section relativement réduite.

Dans les exemples précédents, le circuit 3 forme une deuxième branche d'interconnexion en parallèle du contacteur 51. On peut également envisager que le circuit 3 forme une deuxième branche d'interconnexion en parallèle d'un contacteur connectant sélectivement le pôle négatif de la source 2 à la borne 322.

Lorsque le circuit d'accouplement de puissance 5 comporte des contacteurs 51 et 52, le contacteur n'ayant pas de branche en parallèle est ouvert au préalable lors de la déconnexion entre la source 2 et la charge 4, le circuit 3 pouvant alors rester alimenté. Puis l'autre contacteur ayant la branche en parallèle est ouvert.

## Revendications

1. Système électrique, **caractérisé en ce qu'**il comprend :
- une charge électrique (42, 43) susceptible de consommer un courant maximal Im ;
- un condensateur de découplage (41) connecté en parallèle aux bornes de la charge électrique ;
- un système d'alimentation électrique de puissance à tension continue, comprenant des première et deuxième bornes (321,322) d'application d'une tension d'alimentation aux bornes de la charge électrique, incluant :
- une source de tension continue (2) comprenant des premier et deuxième pôles, le deuxième pôle étant connecté à la deuxième borne (322) du système d'alimentation électrique ;
- une première branche incluant un premier contacteur (51) connectant sélectivement le premier pôle de la source de tension continue à la première borne (321) du système d'alimentation électrique ;
- une deuxième branche incluant des premier et deuxième interrupteurs (302,303) et une inductance (305) connectés en série pour connecter sélectivement le premier pôle de la source de tension continue à la première borne (321) du système d'alimentation électrique ;
- un dispositif de conduction unidirectionnelle (307, 308, 309) de la deuxième borne du système d'alimentation continue vers un noeud de connexion (323) entre le deuxième interrupteur (303) et ladite inductance (305) ;
- un circuit de commande (304) comprenant
- un mode d'alimentation de la charge électrique (42,43) dans lequel il maintient le premier contacteur (51) fermé ;
- un mode de charge du condensateur de découplage (41) dans lequel il maintient le premier contacteur ouvert, dans lequel il maintient le premier interrupteur (302) fermé et dans lequel il commande des commutations du deuxième interrupteur (303) de façon à débiter un courant régulé à un niveau supérieur à Im à travers l'inductance (305), dans lequel il bascule vers le mode d'alimentation de la charge électrique lorsqu'il détermine que la tension entre les première et deuxième bornes dépasse un premier seuil, le courant à travers un circuit incluant la charge électrique et le condensateur de découplage s'écoulant dans le même sens dans le mode d'alimentation de la charge électrique et dans le mode de charge du condensateur de découplage .

2. Système électrique selon la revendication 1, dans lequel le deuxième interrupteur (303) inclut un transistor commandé en régime de commutation par ledit circuit de commande (304).

3. Système électrique selon la revendication 1 ou 2, dans lequel le premier interrupteur (302) est un interrupteur électromécanique.

4. Système électrique selon l'une quelconque des revendications précédentes, dans lequel le deuxième pôle de la source de tension continue et la deuxième borne du système d'alimentation électrique sont sélectivement connectés par l'intermédiaire d'un deuxième contacteur (52), ledit circuit de commande (304) maintenant le deuxième contacteur fermé dans le mode d'alimentation de la charge électrique (42,43) et dans le mode de charge du condensateur de découplage (41).

5. Système électrique selon l'une quelconque des revendications précédentes, dans lequel le circuit de commande (304) comporte un mode de sécurité dans lequel il maintient le premier contacteur (51) ouvert et le premier interrupteur (302) ouvert, ledit circuit de commande (304) déterminant la durée d'un fonctionnement en mode de charge, et commandant le basculement vers le mode de sécurité lorsque ladite durée déterminée dépasse un deuxième seuil.

6. Système électrique selon l'une quelconque des revendications précédentes, dans lequel ledit circuit de commande (304) est configuré pour mesurer la tension entre les premier et deuxième pôles et configuré pour déterminer le premier seuil par soustraction d'une valeur prédéfinie à ladite tension mesurée.

7. Système selon l'une quelconque des revendications précédentes, dans lequel le niveau de courant régulé du mode de charge aboutit à la charge complète du condensateur de découplage en une durée inférieure à 3 secondes lorsque ladite charge électrique (4) consomme le courant Im.

8. Système électrique selon l'une quelconque des revendications précédentes, dans lequel la source de tension continue (2) applique une tension supérieure à 100V entre ses pôles.

9. Système électrique selon l'une quelconque des revendications précédentes, dans lequel les premier et deuxième interrupteurs sont connectés en série entre ledit premier pôle de la source de tension continue et ledit noeud de connexion.

10. Système d'alimentation électrique de puissance à tension continue pour un système électrique selon l'une quelconque des revendications précédentes, comprenant des premières et deuxièmes bornes (321,322) d'application d'une tension d'alimentation aux bornes de la charge électrique, incluant :
- une source de tension continue (2) comprenant des premier et deuxième pôles, le deuxième pôle étant connecté à la deuxième borne (322) du système d'alimentation électrique ;
- une première branche incluant un premier contacteur (51) connectant sélectivement le premier pôle de la source de tension continue à la première borne (321) du système d'alimentation électrique ;
- une deuxième branche incluant des premier et deuxième interrupteurs (302,303) et une inductance (305) connectés en série pour connecter sélectivement le premier pôle de la source de tension continue à la première borne (321) du système d'alimentation électrique ;
- un dispositif de conduction unidirectionnelle (307, 308, 309) de la deuxième borne du système d'alimentation continue (322) vers un noeud de connexion (323) entre le deuxième interrupteur (303) et ladite inductance (305) ;
- un circuit de commande (304) comprenant
- un mode d'alimentation de la charge électrique (42,43) dans lequel il maintient le premier contacteur (51) fermé ;
- un mode de charge du condensateur de découplage (41) dans lequel il maintient le premier contacteur ouvert, dans lequel il maintient le premier interrupteur (302) fermé et dans lequel il commande des commutations du deuxième interrupteur (303) de façon à débiter un courant régulé à travers l'inductance (305) à un niveau supérieur au courant maximal Im susceptible d'être consommé par la charge électrique, et dans lequel il bascule vers le mode d'alimentation de la charge électrique lorsqu'il détermine que la tension entre les première et deuxième bornes dépasse un premier seuil.

## Patentansprüche

1. Elektrisches System, **dadurch gekennzeichnet, dass** es umfasst:
- eine elektrische Last (42, 43), die geeignet ist, einen Maximalstrom Im zu verbrauchen;
- einen Entkopplungskondensator (41), der parallel an die Klemmen der elektrischen Last angeschlossen ist;
- ein elektrisches Versorgungssystem mit Gleichspannungsleistung, umfassend erste und zweite Klemmen (321, 322) zum Anlegen einer Versorgungsspannung an die Klemmen der elektrischen Last; einschließlich:
- einer Gleichspannungsquelle (2), umfassend erste und zweite Pole, wobei der zweite Pol an die zweite Klemme (322) des elektrischen Versorgungssystems angeschlossen ist;
- einen ersten Abschnitt, der ein erstes Schütz (51) einschließt, das selektiv den ersten Pol der Gleichspannungsquelle an die erste Klemme (321) des elektrischen Versorgungssystems anschließt;
- einen zweiten Abschnitt, der erste und zweite Schalter (302, 303) und einen Induktor (305) einschließt, die in Serie geschaltet sind, um selektiv den ersten Pol der Gleichspannungsquelle an die erste Klemme (321) des elektrischen Versorgungssystems anzuschließen;
- eine unidirektionale Leitungsvorrichtung (307, 308, 309) von der zweiten Klemme des Gleichspannungsversorgungssystems zu einem Anschlussknoten (323) zwischen dem zweiten Schalter (303) und dem Induktor (305);
- eine Steuerschaltung (304), umfassend:
- einen Versorgungsmodus der elektrischen Last (42, 43), in dem sie das erste Schütz (51) geschlossen hält;
- einen Lademodus des Entkopplungskondensators (41), in dem sie das erste Schütz offen hält, in dem sie den ersten Schalter (302) geschlossen hält, und in dem sie Umschaltungen des zweiten Schalters (303) steuert, um einen auf ein höheres Niveau als Im eingestellten Strom durch den Induktor (305) zu schicken, in dem sie in den Versorgungsmodus der elektrischen Last schwenkt, wenn sie bestimmt, dass die Spannung zwischen den ersten und zweiten Klemmen eine erste Grenze überschreitet, wobei der Strom durch eine Schaltung die, die elektrische Last und den Entkopplungskondensator einschließt, in dieselbe Richtung im Versorgungsmodus der elektrischen Last und im Lademodus des Entkopplungskondensators abfließt.

2. Elektrisches System nach Anspruch 1, bei dem der zweite Schalter (303) einen Transistor einschließt, der von der Steuerschaltung (304) um Umschaltbetrieb gesteuert wird.

3. Elektrisches System nach Anspruch 1 oder 2, bei dem der erste Schalter (302) ein elektromechanischer Schalter ist.

4. Elektrisches System nach einem der vorhergehenden Ansprüche, bei dem der zweite Pol der Gleichspannungsquelle und die zweite Klemme des elektrischen Versorgungssystems selektiv über ein zweites Schütz (52) angeschlossen sind, wobei die Steuerschaltung (304) das zweite Schütz im Versorgungsmodus der elektrischen Last (42, 43) und im Lademodus des Entkopplungskondensators (41) geschlossen hält.

5. Elektrisches System nach einem der vorhergehenden Ansprüche, bei dem die Steuerschaltung (304) einen Sicherheitsmodus umfasst, in dem sie das erste Schütz (51) offen und den ersten Schalter (302) offen hält, wobei die Steuerschaltung (304) die Dauer eines Betriebs im Lademodus bestimmt und das Schwenken in den Sicherheitsmoduls steuert, wenn die bestimmten Dauer eine zweite Grenze überschreitet.

6. Elektrisches System nach einem der vorhergehenden Ansprüche, bei dem die Steuerschaltung (304) eingerichtet ist, um die Spannung zwischen den ersten und zweiten Polen zu messen, und eingerichtet ist, um die erste Grenze durch Subtraktion eines vordefinierten Werts von der gemessenen Spannung zu bestimmen.

7. System nach einem der vorhergehenden Ansprüche, bei dem das eingestellte Stromniveau des Lademoduls bei der vollständigen Ladung des Entkopplungskondensators in einer Dauer von weniger als 3 Sekunden endet, wenn die elektrische Last (4) den Strom Im verbraucht.

8. Elektrisches System nach einem der vorhergehenden Ansprüche, bei dem die Gleichspannungsquelle (2) eine Spannung über 100V zwischen ihren Polen anlegt.

9. Elektrisches System nach einem der vorhergehenden Ansprüche, bei dem die ersten und zweiten Schalter in Serie zwischen dem ersten Pol der Gleichspannungsquelle und dem Anschlussknoten geschaltet sind.

10. Elektrisches Versorgungssystem mit Gleichspannungsleistung für ein elektrisches System nach einem der vorhergehenden Ansprüche, umfassend erste und zweite Klemmen (321, 322) zum Anlegen einer Versorgungsspannung an die Klemmen der elektrischen Last, einschließlich:
- einer Gleichspannungsquelle (2), umfassend erste und zweite Pole, wobei der zweite Pol an die zweite Klemme (322) des elektrischen Versorgungssystems angeschlossen ist;
- einen ersten Abschnitt, der ein erstes Schütz (51) einschließt, das selektiv den ersten Pol der Gleichspannungsquelle an die erste Klemme (321) des elektrischen Versorgungssystems anschließt;
- einen zweiten Abschnitt, der erste und zweite Schalter (302, 303) und einen Induktor (305) einschließt, die in Serie geschaltet sind, um selektiv den ersten Pol der Gleichspannungsquelle an die erste Klemme (321) des elektrischen Versorgungssystems anzuschließen;
- eine unidirektionale Leitungsvorrichtung (307, 308, 309) von der zweiten Klemme des Gleichspannungsversorgungssystems (322) zu einem Anschlussknoten (323) zwischen dem zweiten Schalter (303) und dem Induktor (305);
- eine Steuerschaltung (304), umfassend:
- einen Versorgungsmodus der elektrischen Last (42, 43), in dem sie das erste Schütz (51) geschlossen hält;
- einen Lademodus des Entkopplungskondensators (41), in dem sie das erste Schütz offen hält, in dem sie den ersten Schalter (302) geschlossen hält, und in dem sie Umschaltungen des zweiten Schalters (303) steuert, um einen auf ein höheres Niveau als der Maximalstrom Im eingestellten Strom durch den Induktor (305), der von der elektrischen Last verbraucht werden kann, zu schicken, und in dem sie in den Versorgungsmodus der elektrischen Last schwenkt, wenn sie bestimmt, dass die Spannung zwischen den ersten und zweiten Klemmen eine erste Grenze überschreitet.

## Claims

1. Electrical system, **characterized in that** it comprises:
- an electrical load (42, 43) that is liable to consume a maximum current Im;
- a decoupling capacitor (41) connected in parallel to the terminals of the electrical load;
- a DC voltage electrical power supply system, comprising first and second terminals (321, 322) for applying a supply voltage to the terminals of the electrical load, including:
- a DC voltage source (2) comprising first and second poles, the second pole being connected to the second terminal (322) of the electrical power supply system;
- a first branch including a first contactor (51) selectively connecting the first pole of the DC voltage source to the first terminal (321) of the electrical power supply system;
- a second branch including first and second switches (302, 303) and an inductor (305) that are connected in series in order to selectively connect the first pole of the DC voltage source to the first terminal (321) of the electrical power supply system;
- a device (307, 308, 309) for unidirectional conduction from the second terminal of the DC power supply system to a connection node (323) between the second switch (303) and said inductor (305);
- a control circuit (304) comprising:
- a mode for supplying power to the electrical load (42, 43) wherein the first contactor (51) is kept closed;
- a mode for charging the decoupling capacitor (41) wherein the control circuit keeps the first contactor open, wherein the control circuit keeps the first switch (302) closed and wherein the control circuit controls the switching actions of the second switch (303) so as to output a current regulated to a level higher than Im via the inductor (305), wherein it toggles to the mode for supplying power to the electrical load when it determines that the voltage between the first and second terminals exceeds a first threshold, the current through a circuit including the electrical load and the decoupling capacitor flowing in the same direction in the mode for power supplying power to the electrical load and in the mode for charging the decoupling capacitor.

2. Electrical system according to Claim 1, wherein the second switch (303) includes a transistor whose switching regime is controlled by said control circuit (304).

3. Electrical system according to Claim 1 or 2, wherein the first switch (302) is an electromechanical switch.

4. Electrical system according to any one of the preceding claims, wherein the second pole of the DC voltage source and the second terminal of the electrical power supply system are selectively connected via a second contactor (52), said control circuit (304) keeping the second contactor closed in the mode for supplying power to the electrical load (42, 43) and in the mode for charging the decoupling capacitor (41).

5. Electrical system according to any one of the preceding claims, wherein the control circuit (304) comprises a safe mode wherein it keeps the first contactor (51) open and the first switch (302) open, said control circuit (304) determining the duration of an operation in charging mode, and controlling the toggling to the safe mode when said determined duration exceeds a second threshold.

6. Electrical system according to any one of the preceding claims, wherein said control circuit (304) is configured to measure the voltage between the first and second poles and configured to determine the first threshold by subtracting a predefined value from said measured voltage.

7. System according to any one of the preceding claims, wherein the regulated current level of the charging mode results in the complete charging of the decoupling capacitor in a duration of less than three seconds when said electrical load (4) consumes the current Im.

8. Electrical system according to any one of the preceding claims, wherein the DC voltage source (2) applies a voltage that is higher than 100 V across its poles.

9. Electrical system according to any one of the preceding claims, wherein the first and second switches are connected in series between said first pole of the DC voltage source and said connection node.

10. DC voltage electrical power supply system for an electrical system according to any one of the preceding claims, comprising first and second terminals (321, 322) for applying a supply voltage to the terminals of the electrical load, including:
- a DC voltage source (2) comprising first and second poles, the second pole being connected to the second terminal (322) of the electrical power supply system;
- a first branch including a first contactor (51) selectively connecting the first pole of the DC voltage source to the first terminal (321) of the electrical power supply system;
- a second branch including first and second switches (302, 303) and an inductor (305) that are connected in series in order to selectively connect the first pole of the DC voltage source to the first terminal (321) of the electrical power supply system;
- a device (307, 308, 309) for unidirectional conduction from the second terminal of the DC power supply system (322) to a connection node (323) between the second switch (303) and said inductor (305);
- a control circuit (304) comprising:
- a mode for supplying power to the electrical load (42, 43) wherein the first contactor (51) is kept closed;
- a mode for charging the decoupling capacitor (41) wherein the first contactor is kept open, wherein the first switch (302) is kept closed and wherein switching actions of the second switch (303) are controlled so as to output a current regulated via the inductor (305) to a level higher than the maximum current Im that is liable to be consumed by the electrical load, and wherein it toggles to the mode for supplying power to the electrical load when it determines that the voltage between the first and second terminals exceeds a first threshold.
